Europäisches Patentamt

European Patent Office

Office européen des brevets

(11) Veröffentlichungsnummer: **0 008 765**

**A1**

# EUROPÄISCHE PATENTANMELDUNG

(21) Anmeldenummer: **79103166.9**

(22) Anmeldetag: **27.08.79**

(51) Int. Cl.³: **H 04 B 15/02**
**H 02 K 5/16**

(30) Priorität: **08.09.78 DE 2839246**

(43) Veröffentlichungstag der Anmeldung:
**19.03.80 Patentblatt 80/6**

(84) Benannte Vertragsstaaten:
**AT BE DE FR GB IT SE**

(71) Anmelder: **SIEMENS AKTIENGESELLSCHAFT Berlin
und München
Postfach 261
D-8000 München 22(DE)**

(72) Erfinder: **Grassmann, Hans-Christian
An den Eichen 18
D-8521 Igelsdorf(DE)**

(54) Anordnung zum Unterdrücken von Hochfrequenzströmen in Lagern von Wellen.

(57) Die Anordnung dient zum Unterdrücken von Hochfrequenzströmen in Lagern von Wellen bei kapazitiven Behandlungseinrichtungen mit Betriebsfrequenzen in Megahertzbereich. Der sich durch die Lagerkapazität ergebende Widerstand (26) wird derart im Rahmen eines elektrischen Vierpols (28) angeordnet, daß die Hochfrequenzspannung kleiner als 0,7 V bleibt. Die Minimierung der Spannung wird bei massefreien Wellen durch einen parallel zum Lager angeordneten Schleifkontakt erreicht.

Das hiezu bestimmte Element des Vierpols (28) ist – neben dem Schleifkontakt – ein in Reihe mit dem Lager geschalteter hochohmiger Parallelresonanzkreis (33, 34), dessen Kapazität (34) durch eine Isolierplatte und dessen Induktivität (33) durch eine Wicklung gebildet sind.

FIG 1

EP 0 008 765 A1

SIEMENS AKTIENGESELLSCHAFT Unser Zeichen
Berlin und München VPA 78 P 3 1 7 3 EUR

Anordnung zum Unterdrücken von Hochfrequenzströmen in
Lagern von Wellen

Die Erfindung bezieht sich auf eine Anordnung zum Unterdrücken von Hochfrequenzströmen in Lagern von Wellen
bei Behandlungseinrichtungen mit Betriebsfrequenzen oberhalb von 10 kHz, wobei zum sich ergebenden kapazitiven
Lagerwiderstand und einen ihm vorgeschalteten, zumindest den induktiven Widerstand der Welle umfassenden
Widerstand ein weiterer Widerstand in Reihe geschaltet
ist, derart, daß die Summe der beiden letztgenannten
Widerstände groß im Verhältnis zum Lagerwiderstand ist
und daß zu diesem Reihenzweig ein Widerstand parallel
geschaltet ist, so daß durch die Dimensionierung des
gebildeten elektrischen Vierpols die Hochfrequenzspannung am Lagerwiderstand ein Minimum erreicht und kleiner als 0,7 Volt bleibt.

Durch diese vorgenannte Anordnung wird die Aufgabe ge-

Ch 2 Sie / 02.08.1978

löst, die Wellenenden auf ein massenahes Potential zu bringen und schädliche Lagerströme auf einfache Weise auf ein erträgliches Maß herabzusetzen bzw. ganz zu vermeiden. Es taucht nun gelegentlich das Problem auf, daß die Welle nicht geerdet werden soll, so daß das elektrische Potential auf ihr mehr oder minder undefiniert wird. In einem solchen Fall ist der Parallelwiderstand zum Reihenzweig vor allem durch die Kopplungskapazität zwischen Welle und Gehäuse bestimmt und daher als nicht mehr klein im Verhältnis zum Lagerwiderstand anzusehen.

Die Aufgabe der vorliegenden Erfindung besteht darin, die Lagerströme auch in einem solchen Fall klein zu halten, wenn das Potential der Welle nicht massenah ist. Diese Aufgabe wird erfindungsgemäß dadurch gelöst, daß dem Lagerwiderstand ein im Verhältnis hierzu niederohmiger Widerstand parallel geschaltet ist, falls der kapazitive Parallelwiderstand zum Reihenzweig groß im Verhältnis zum Lagerwiderstand ist. Vorteilhafterweise kann dabei dieser Widerstand durch einen Schleifkontakt gebildet sein, der parallel zum Lagerwiderstand angeordnet wird. Anhand einer Zeichnung sei die Erfindung näher erläutert:

es zeigen:

Figur 1 ein elektrisches Ersatzschaltbild der Hochfrequenzanordnung und

Figur 2 eine konstruktive Gestaltung einer Lagerung einer Welle bei einem Hochfrequenzgerät.

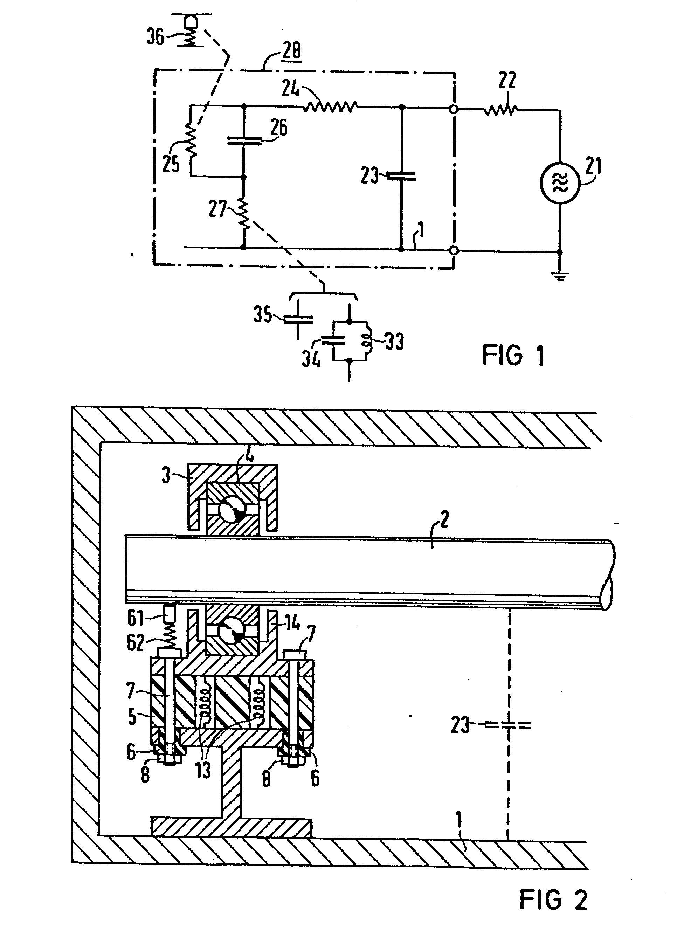

Bei dem in Figur 1 gezeigten elektrischen Ersatzschaltbild ist mit 21 die Hochfrequenzspannungsquelle bezeichnet, die Spannungen in der Welle induziert. Die Frequenz dieser Spannungen möge beispielsweise bei 30 MHz liegen. Mit 22 ist der innere Widerstand dieser Spannungsquelle bezeichnet. Bei einer normalen Lagerung ist noch ein durch die Lagerkapazität gebildeter kapazitiver Widerstand 26 vorhanden, über den dann der Hochfrequenzstrom zum Gehäuse abfließen kann. Ferner ist auch noch der kapazitive Widerstand 23 vorhanden, der durch die Kapazitäten zwischen Gehäuse und Welle gebildet ist.

Zur Verhinderung des Stromflusses über die Lagerkapazität wird der Lagerwiderstand 26 im Rahmen eines elektrischen Vierpols 28 angeordnet. Dieser Vierpol hat eingangsseitig einen Querzweig mit einem im Verhältnis zum Lagerwiderstand 26 hochohmigen kapazitiven Widerstand 23 Im Längszweig liegt ein Widerstand 24, der zumindest die Induktivität der Welle umfaßt. Im nächsten Querzweig, in dem der Lagerwiderstand 26 liegt, ist zusätzlich in Reihe zu der den Lagerwiderstand 26 bestimmenden Lagerkapazität noch ein im Verhältnis hierzu hochohmiger Widerstand 27 vorgesehen. Gleichzeitig ist parallel zum Lagerwiderstand 26 noch ein weiterer, im Verhältnis zum Lagerwiderstand niederohmiger Widerstand 25 angeordnet, der vorzugsweise aus einem Schleifkontakt 36 besteht.

Als Widerstand 27 kann entweder ein im Verhältnis zur Lagerkapazität relativ kleiner Kondensator 35 oder ein auf die Betriebsfrequenz abgestimmter Parallelresonanzkreis in Form von Kondensator 34 und Induktivität 33 benutzt werden.

Figur 2 zeigt die konstruktive Realisierung des Ersatzschaltbildes. Eine innerhalb der Gehäusewandung 1 eines Hochfrequenzbehandlungsraumes gelagerte Welle 2 ist in einem Lager 4 gelagert. Dieser Teil entspricht der Spannungsquelle 21, dem Innenwiderstand 22, dem Längswiderstand 24 und dem Lagerwiderstand 26. Das Lager 4 ist von einem Lagergehäuse 3 umgeben, das auf einer Tragplatte 14 befestigt ist. Diese Tragplatte 14 ruht auf einer Isolierplatte 5 und ist über Bolzen 7, Isolierscheiben 6 und Muttern 8 befestigt. In Analogie zum elektrischen Ersatzschaltbild entspricht dabei die Isolierplatte 5 dem Kondensator 35 bzw. dem Kondensator 34 des Parallelschwingkreises, falls in der Isolierstoffplatte 5 noch Bohrungen vorgesehen sind, in denen einen abstimmbare Induktivität 13 untergebracht ist. Diese Induktivität 13 entspricht der Induktivität 33 im Ersatzschaltbild nach Figur 1.

Der zur Lagerkapazität parallelgeschaltete Widerstand 25 aus Figur 1 ist in Figur 2 durch den Schleifkontakt 61 und die Druckfeder 62 dargestellt, wobei der Schleifkontakt auf der Welle 2 schleift und die Druckfeder mit dem Lagergehäuse 3 elektrisch leitend verbunden ist. Die beschriebene Anordnung hat die Eigenschaft, in Form eines Spannungsteilers die Lagerspannung möglichst zu verkleinern und den Fluß von Lagerströmen über das Lager 4 zu verhindern.

2 Patentansprüche
2 Figuren

Patentansprüche

1. Anordnung zum Unterdrücken von Hochfrequenzströmen in Lagern von Wellen bei Behandlungseinrichtungen mit Betriebsfrequenzen oberhalb von 10 kHz, wobei zum sich ergebenden kapazitiven Lagerwiderstand und einen ihm vorgeschalteten, zumindest den induktiven Widerstand der Welle umfassenden Widerstand ein weiterer Widerstand in Reihe geschaltet ist, derart, daß die Summe der beiden letztgenannten Widerstände groß im Verhältnis zum Lagerwiderstand ist und daß zu diesem Reihenzweig ein Widerstand parallel geschaltet ist, so daß durch die Dimensionierung des gebildeten Vierpols die Hochfrequenzspannung am Lagerwiderstand ein Minimum erreicht und kleiner als 0,7 Volt bleibt, d a d u r c h g e k e n n z e i c h n e t, daß dem Lagerwiderstand (26) ein im Verhältnis hierzu nied-rohmiger Widerstand (25) parallel geschaltet ist, falls der Parallelwiderstand (23) zum Reihenzweig groß im Verhältnis zum Lagerwiderstand (26) ist.

2. Anordnung nach Anspruch 1, dadurch gekennzeichnet, daß der Widerstand (25) parallel zum Lagerwiderstand durch einen Schleifkontakt (36) gebildet ist.

FIG 1

FIG 2

Europäisches
Patentamt

**EUROPÄISCHER RECHERCHENBERICHT**

0008765
Nummer der Anmeldung

EP 79103166.9

| | EINSCHLÄGIGE DOKUMENTE | | | KLASSIFIKATION DER ANMELDUNG (Int.Cl.³) |
|---|---|---|---|---|
| Kategorie | Kennzeichnung des Dokuments mit Angabe, soweit erforderlich, der maßgeblichen Teile | | betrifft Anspruch | |
| D,P, X | DE - A1 - 2 717 593 (SIEMENS) 26. Okt. 1978 + Anspruch 8, Figuren 1, 2 + -- | | 1, 2 | H 04 B 15/02 H 02 K 5/16 |
| | FR - A - 1 217 229 (SOCIÉTÉ GÉNÉRALE DE CONSTRUCTIONS ÉLECTRIQUES & MÉCANIQUES) + Figur 1 + -- | | 1, 2 | |
| A | DE - C - 946 636 (TELEFUNKEN) + Seite 2, Zeile 118 - Seite 3, Zeile 25 + -- | | 1, ? | RECHERCHIERTE SACHGEBIETE (Int. Cl.³) H 04 B 15/00 H 02 K 5/00 |
| A | DE - B - 1 138 840 (SOCIÉTÉ ANONYME FRANCAISE DU FERODO) + Spalte 3, Zeilen 17 - 36 + -- | | 1, 2 | |
| A | GB - A - 960 463 (PYE) + Figuren 1 und 2 + ---- | | 1, 2 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 12 - 11 -1979 | DRÖSCHER |

EPA form 1503.1   06.78